# EUROPÄISCHE PATENTANMELDUNG

(11) **EP 3 528 185 A1**
(43) Veröffentlichungstag der Anmeldung: **21.08.2019**
(21) Anmeldenummer: 19157347.6
(22) Anmeldetag: 15.02.2019
(51) Int. Cl.: G06Q 10/04

(54) **SYSTEM ZUR AUTOMATISIERTEN PLANUNG EINES GLASFASER-ROLLOUTS**

(30) Priorität: 19.02.2018 DE 102018103656
(71) Anmelder: Deutsche Telekom AG, 53113 Bonn (DE)
(72) Erfinder: Geis, Manfred, 61479 Glashütten-Schloßborn (DE); Ortwig, Frank, 57462 Olpe (DE); Seemann, Bernd, 45143 Essen (DE); Dreyer, Karsten, 64385 Reichelsheim (DE); Sommer, Guido, 22523 Hamburg (DE); Decker, Rudolf, 53117 Bonn (DE); Honekamp, Michael, 48683 Ahaus (DE)
(74) Vertreter: Raible Deissler Lehmann Patentanwälte PartG mbB

(57) **Zusammenfassung**

Die Erfindung betrifft ein System (500) zur automatisierten Planung eines Glasfaser-Rollouts, wobei das System (500) folgendes umfasst: ein mobiles Aufzeichnungsgerät (510) zum Erfassen von Umgebungsdaten (511) eines geografischen Bereichs (501), insbesondere ein Fahrzeug mit Sensoren (z.B. Kamera, Laser); und einen Prozessor (520), der ausgebildet ist zum Ermitteln einer Objekt- und Materialstruktur des erfassten geografischen Bereichs (501) basierend auf einer Klassifikation der erfassten Umgebungsdaten (511), insbesondere einer Klassifikation mit einem selbstlernenden Neuronalen Netzwerk; Erzeugen einer erweiterten Datenbasis von Geodaten des geografischen Bereichs (501) basierend auf einer Anreicherung einer vorhandenen Datenbasis (522) von Geodaten des geografischen Bereichs (501) mit der ermittelten Objekt- und Materialstruktur des erfassten geografischen Bereichs (501) unter Verwendung von vorgegebenen geografischen Informationen (521) des geografischen Bereichs (501); und Bestimmen zumindest einer Route (524) zwischen zumindest einem vorgebbaren Glasfaseranschlusspunkt und zumindest einem Glasfaserabschlusspunkt basierend auf einem Optimierungskriterium unter Verwendung der erweiterten Datenbasis von Geodaten des geografischen Bereichs (501).

## Beschreibung

Die vorliegende Erfindung betrifft ein System zur automatisierten, insbesondere vollautomatisierten Planung eines Glasfaser-Rollouts. Die Erfindung betrifft insbesondere ein System und ein Verfahren zur automatisierten Planung eines Glasfaser-Rollouts sowie Planungstools zur Realisierung des Rollouts bzw. der Einführung von Glasfaseranschlüssen zum Anschluss von Heim- und Unternehmensnetzwerken an das Internet bzw. an Weitverkehrsnetze (Wide Area Networks (WAN)).

Die Gigabit-Gesellschaft stellt eine fortgeschrittene Informationsgesellschaft dar, die vollständig von Informations-und Kommunikationstechnik durchdrungen ist. Menschen, Maschinen, Dinge und Prozesse werden nahtlos miteinander vernetzt sein. Die Netzinfrastrukturen der Gigabit-Gesellschaft müssen den Transport der massiv anwachsenden Datenmengen ermöglichen und darüber hinaus intelligente Funktionen und Dienste bereitstellen, um divergierende Anforderungen zukünftiger Anwendungen bestmöglich zu unterstützen. So erfordern Anwendungsbereiche wie zum Beispiel Industrie 4.0 sowie automatisiertes und vernetztes Fahren vor allem einen zuverlässigen Datenaustausch zwischen Maschinen in Echtzeit, während beispielsweise bei Anwendungen im Medienbereich oftmals zeittolerantes Videostreaming, sowie Virtual- und Augmented Reality-Anwendungen im Vordergrund stehen. Abgeleitet von den Anforderungen künftiger Anwendungen sind die Kriterien Verfügbarkeit, Sicherheit und Flexibilität hinsichtlich der Anwendungsunterstützung die wichtigsten Anforderungen an konvergente Gigabit-Infrastrukturen. Weitere Faktoren sind Dienstgüte-Eigenschaften wie geringe Latenz, steigende Datenraten oder Mobilitätseigenschaften. Um so schnell wie möglich Gigabit-Anwendungen zu ermöglichen, ist ein massiver Rollout von Glasfaser unerlässlich.

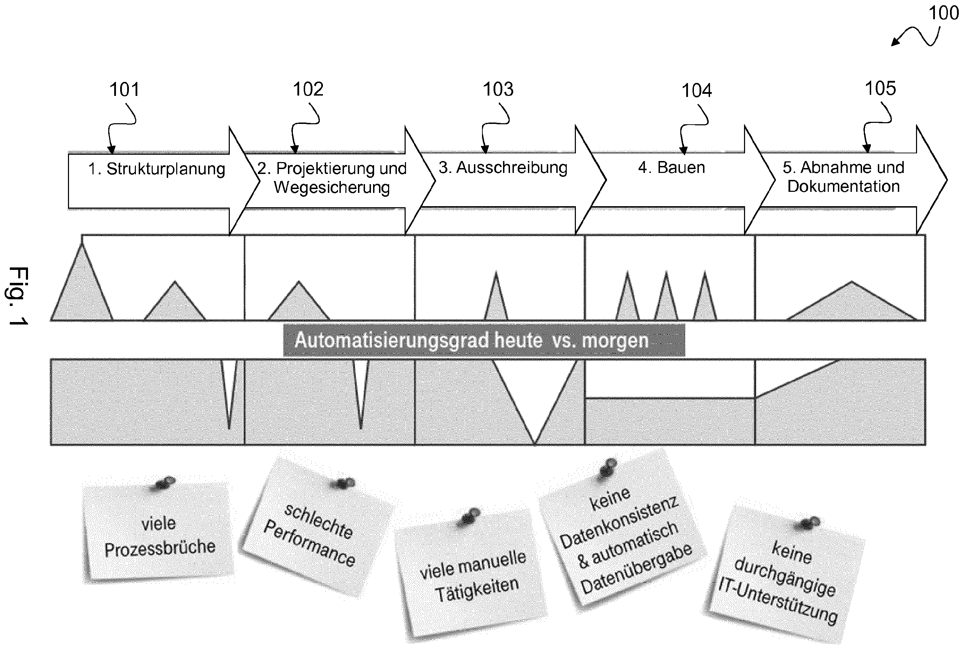

Figur 1 zeigt den aktuellen Stand einer bestehenden Produktionsprozesskette 100 für den Glasfaser-Rollout. Die Prozesskette 100 umfasst die verschiedenen Prozesse Strukturplanung 101, Projektierung und Wegesicherung 102, Ausschreibung 103, Bauen 104 und Abnahme und Dokumentation 105. Unter den einzelnen Prozessen ist jeweils der heute erzielte Automatisierungsgrad aufgezeigt. Selbst wenn sich der Automatisierungsgrad der Einzelprozesse in der Zukunft erhöhen sollte, wie in Figur 1 dargestellt, verbleiben bei dieser Produktionsprozesskette 100 die Nachteile vieler Prozessbrüche, schlechter Performance, vieler manueller Tätigkeiten, keiner Datenkonsistenz und keiner automatischen Datenübergabe sowie keiner durchgängigen IT (Informationstechnik)-Unterstützung.

Es ist die Aufgabe der vorliegenden Erfindung, ein Konzept und eine Lösung zu schaffen, um den Glasfaser-Rollout zu beschleunigen und die oben beschriebenen Nachteile zu vermeiden. Insbesondere ist es eine Aufgabe der Erfindung, eine verbesserte, insbesondere höher automatisierte Produktionsprozesskette zu schaffen, mit der der Glasfaser-Rollout beschleunigt werden kann.

Diese Aufgabe wird durch die Merkmale der unabhängigen Ansprüche gelöst. Vorteilhafte Weiterbildungsformen sind Gegenstand der abhängigen Ansprüche.

Eine Kernidee der Erfindung besteht darin, die vorhandenen manuellen Planungs- und Rollout-Prozesse für den Massenmarkt Glasfaser-Rollout zu automatisieren und zu verbessern, indem kommerziell verfügbare Lösungen verwendet werden und ein hochgradig automatisierter und präziser Planungsprozess erstellt wird. Durch die Automatisierung dieses umfangreichen und aufwändigen Prozesses kann eine erhebliche Steigerung der Anzahl der Glasfaserverbindungen bei gleichzeitiger Verbesserung der Genauigkeit des Glasfaser-Rollouts erzielt werden. Die manuelle Arbeit, die erforderlich ist, um die theoretischen Pläne manuell an die reale Situation anzupassen, kann mit fortschreitender technischer Entwicklung vollständig automatisiert werden. Für bestehende und zukünftige Endkunden des Rollout-Betreibers bedeutet dies, dass sie schneller mit Glasfaser versorgt werden, indem ihre Häuser und Wohnungen mit Hochgeschwindigkeits-Datennetzwerk-Konnektivität ausgestattet werden, welche ihnen einen schnellen mobilen Zugang bietet und sie so für die Zukunft der "Digitalisierung" besser gerüstet sind.

Das Konzept der Anmeldung basiert auf einer automatisierten Planung des Glasfaser-Rollouts und umfasst die folgenden Punkte:
1) Sammeln von Umweltdaten (z.B. Gebäude, Bäume, Oberflächen usw.) mit einem Fahrzeug, um eine "nahezu Echtzeit-Ansicht" der tatsächlichen Situation, auch Topographie genannt, zu erhalten.
2) Die gesammelten Daten werden verwendet, um die in der Örtlichkeit vorhandenen Objekte und Materialien über ein neuronales Netzwerk mit Mechanismen der künstlichen Intelligenz und des Selbstlernens zu klassifizieren und sie in einer vordefinierten Geodateninfrastruktur zu speichern und sie in Geographischen Informationssystemen sowie schließlich in digitalen Karten darzustellen.
3) Verwendung geographischer Informationen aus verschiedenen Datenquellen (z.B. vorhandene Kabeltrassen, Liegenschaftsdaten, Schutzgebiete, Straßen, Bahnlinien usw.), um automatisch die optimale Routenführung für die Glasfaserkabel zu erstellen.
4) Automatische Berechnung des Routings mit den geringsten Kosten (d.h. geringstem technischen Aufwand) für den Bau, den Einsatz von Glasfaser in ausgewählten bzw. vorgegebenen Bereichen.
5) Die gesamte automatische Planungs-Verarbeitungskette basiert auf Standard-Produkten, wobei verfügbare Technologien in einer verbundenen und ausgerichteten Weise verwendet werden.
6) Nach Abschluss der Bauarbeiten wird die "Ist-Situation" mit hochmodernen Messgeräten in den jeweiligen Systemen übernommen.

Damit kann die komplette Produktionskette mit Hilfe von Umweltdatenerfassung, künstlicher Intelligenz und selbstlernenden Systemen abgebildet werden. Damit kann eigenständig die am besten (in Bezug auf die Kosten) optimierten Glasfaser-Rollout-Pläne bzw. -Designs berechnet werden zur Verbindung von Wohnungen, Bungalows, Apartments, Büros, Fabrikationsanlagen mit allen Arten von drahtlosen Technologien, wie z.B. 4G, 5G, Wireless-to-the-Home, Small Cells etc.

Die hier vorgestellten Techniken zielen auf die komplette Produktionskette zum Planen und Entwerfen des Glasfaser-Rollouts als Wegbereiter für die zukünftige Digitalisierung.

Die im Folgenden vorgestellten Verfahren und Systeme können von verschiedener Art sein. Die einzelnen beschriebenen Elemente können durch Hardware- oder Softwarekomponenten realisiert sein, beispielsweise elektronische Komponenten, die durch verschiedene Technologien hergestellt werden können.

Gemäß einem ersten Aspekt betrifft die Erfindung ein System zur automatisierten Planung eines Glasfaser-Rollouts, wobei das System folgendes umfasst: ein mobiles Aufzeichnungsgerät zum Erfassen von Umgebungsdaten eines geografischen Bereichs, insbesondere ein Fahrzeug mit entsprechend geeigneten Sensoren (z.B. Kamera, Laser usw.); und einen Prozessor, der ausgebildet ist zur Ermittlung einer Objekt- und Materialstruktur des erfassten geografischen Bereichs basierend auf einer Klassifikation der erfassten Umgebungsdaten, insbesondere einer Klassifikation mit einem selbstlernenden Neuronalen Netzwerk; Erzeugen einer erweiterten Datenbasis von Geodaten des geografischen Bereichs basierend auf einer Anreicherung einer vorhandenen Datenbasis von Geodaten des geografischen Bereichs mit der ermittelten Objekt- und Materialstruktur des erfassten geografischen Bereichs unter Verwendung von vorgegebenen geografischen Informationen des geografischen Bereichs; und Bestimmen einer Route zwischen zumindest einem vorgebbaren Glasfaseranschlusspunkt und zumindest einem Glasfaserabschlusspunkt basierend auf einem Optimierungskriterium unter Verwendung der erweiterten Datenbasis von Geodaten des geografischen Bereichs.

Ein solches System erlaubt es, vorhandene manuelle Planungs- und Rollout-Prozesse für das Glasfaser-Rollout zu automatisieren und zu verbessern, indem kommerziell verfügbare Lösungen verwendet werden und ein hochgradig automatisierter und präziser Planungsprozess erstellt wird. Durch die Nutzung der umfangreichen Bestandsdaten aus vorhandenen Datenbanken und die Anreicherung dieser Daten über mit hoher Genauigkeit aufgezeichneter Umgebungsdaten, z.B. 3D-Bildern von Objekten und feinste Oberflächenstrukturen des geografischen Bereichs kann eine erhebliche Steigerung der Anzahl der Glasfaserverbindungen bei gleichzeitiger Verbesserung der Genauigkeit des Glasfaser-Rollouts erzielt werden. Die manuelle Arbeit, die erforderlich ist, um die theoretischen Pläne manuell an die reale Situation anzupassen, kann mit fortschreitender technischer Entwicklung vollständig automatisiert werden. Für bestehende und zukünftige Endkunden des Rollout-Betreibers bedeutet dies, dass sie schneller mit Glasfaser versorgt werden, indem ihre Häuser und Wohnungen mit Hochgeschwindigkeits-Datennetzwerk-Konnektivität ausgestattet werden, welche ihnen einen schnellen mobilen Zugang bietet und sie so für die Zukunft der "Digitalisierung" besser gerüstet sind.

In einer beispielhaften Implementierung des Systems zur automatisierten Planung des Glasfaser-Rollouts umfassen die Umgebungsdaten eine geographische Verortung der realen Topographie. Dazu gehören z.B. Bebauung und Vegetation des geografischen Bereichs, weiterhin Straßen, Bahnlinien, Grünstreifen usw. sowie insbesondere deren Oberflächeneigenschaften (Pflaster, Asphalt, Beton, usw.) einschließlich Standort, Größe, Zustand und Art der Objekte. Eingeschlossen sind auch Fassadendaten der Gebäude mit Fenstern und Oberflächen aber auch unterirdische Objekte wie Strom-, Wasser- und Gastrassen oder die Geologie des geographischen Bereichs.

Durch die Nutzung dieser detaillierten Daten zu Verlauf und Struktur des geografischen Bereichs lassen sich sehr präzise Umgebungsdaten gewinnen, welche es dem System erlauben, eine optimale Route mit hoher Präzision auszugeben.

In einer beispielhaften Implementierung des Systems zur automatisierten Planung des Glasfaser-Rollouts umfassen die vorgegebenen geografischen Informationen des geografischen Bereichs Informationen aus amtlichen geografischen Registern, insbesondere Liegenschaftsinformationen.

Dies bietet den Vorteil, dass bei Hinzuziehung von amtlichen geografischen Registern mehr und genauere Informationen über den geografischen Bereich verfügbar sind, so dass eine genauere Planung vorgenommen werden kann, die nicht mehr nachbearbeitet werden muss. Zum Beispiel können Eigentümerverhältnisse berücksichtigt werden, es können Anfragen an die Eigentümer automatisiert erstellt werden, z.B. Anfragen, ob der Eigentümer mit der Verlegung der Glasfaser auf seinem Grundstück einverstanden ist, etc.

In einer beispielhaften Implementierung des Systems zur automatisierten Planung des Glasfaser-Rollouts beruht das Optimierungskriterium auf einer Minimierung von Materialkosten zur Verlegung eines Glasfaserkabels zur Verbindung des zumindest einen vorgebbaren Glasfaseranschlusspunktes mit dem zumindest einen vorgegebenen Glasfaserabschlusspunkt.

Dies bietet den Vorteil, dass die optimale Route bestimmt wird, welche nicht unbedingt dem kürzesten Weg entspricht sondern dem Weg, bei dem die geringsten Materialkosten entstehen, z.B. Aufgraben einer Grasoberfläche ist günstiger als Aufgraben einer Straße. In einer beispielhaften Implementierung des Systems zur automatisierten Planung des Glasfaser-Rollouts ist der Prozessor ausgebildet, eine optimale Route des Glasfaserkabels zusammen mit einer Auflistung der Materialkosten bei Nutzung der optimalen Route auszugeben.

Dies bietet den Vorteil, dass das System automatisiert die optimale Route zusammen mit den notwendigen Materialkosten ausgibt, so dass der Planer alle notwendigen Informationen zur Hand hat, um zügig mit der Verlegung zu beginnen. Mit einer solchen Auflistung lässt sich das Glasfaser-Rollout daher beschleunigen.

In einer beispielhaften Implementierung des Systems zur automatisierten Planung des Glasfaser-Rollouts ist der Prozessor ausgebildet, einen Aufwand zum Aushub von Material zur Verlegung des Glasfaserkabels zu bestimmen; und das Optimierungskriterium berücksichtigt den Aufwand zum Aushub von Material zur Verlegung des Glasfaserkabels.

Dies bietet den Vorteil, dass in das System detaillierte Informationen zum Materialaushub mit einfließen. Bei den Grabungsarbeiten mit dem Bagger kann, je nach Deckschicht und Bodenklasse, nur eine relativ kurze Strecke pro Tag erzielt werden. Die Kosten auf dem Land steigen durch lange Streckenführungen. Eine Berücksichtigung dieser Kosten durch das Optimierungskriterium führt zu einer besseren Planbarkeit und damit einer zügigeren Durchführung des Glasfaser-Rollouts.

In einer beispielhaften Implementierung des Systems zur automatisierten Planung des Glasfaser-Rollouts ist der Prozessor ausgebildet, bereits bestehende Trassen zur Führung des Glasfaserkabels in dem geografischen Bereich zu erkennen, insbesondere vorhandene Masten und/oder unterirdische Leitungen; und das Optimierungskriterium berücksichtigt die bereits bestehenden Trassen zur Führung des Glasfaserkabels.

Dies bietet den Vorteil, dass das System durch die Erkennung bereits vorhandener Trassen, wie Masten und unterirdischer Leitungen, es vermeidet, dass parallel zu bestehenden Trassen neue Trassen mit hohem Aufwand angelegt werden. Die Nutzung vorhandener Trassen führt zu einer Reduzierung der Kosten und damit einer schnelleren Umsetzung des Rollouts.

In einer beispielhaften Implementierung des Systems zur automatisierten Planung des Glasfaser-Rollouts ist der Prozessor ausgebildet, bereits vorhandene Kabel und deren Beschaltung in dem geografischen Bereich zu erkennen; und das Optimierungskriterium basiert auf einer Nutzung der vorhandenen Trassen zur Führung des Glasfaserkabels.

Dies bietet den Vorteil, dass das System durch die Erkennung und Nutzung bestehender Trassen sowie deren Beschaltung eine optimale Route bestimmen kann, welche noch vorhandene Kapazitäten dieser Trassen nutzt und so zu einer Beschleunigung des Rollouts mit geringerem technischen Aufwand führt.

In einer beispielhaften Implementierung des Systems zur automatisierten Planung des Glasfaser-Rollouts ist der Prozessor ausgebildet, die erweiterte Datenbasis von Geodaten des geografischen Bereichs basierend auf einer Korrektur von historischen geografischen Informationen mit falschen Geo-Koordinaten des geografischen Bereichs zu erzeugen, wobei die Korrektur auf einem Abgleich mit Geo-Koordinaten der mit dem mobilen Aufzeichnungsgerät erfassten Umgebungsdaten und aus aktuellem, amtlichem Kartenmaterial des Liegenschaftskatasters des geografischen Bereichs basiert.

Dies bietet den Vorteil, dass historische Daten, d.h. Kartenmaterial aus historischen Archiven genutzt werden kann, um eine aktuelle Datenbasis von Geodaten zu erzeugen, wobei durch die von dem Fahrzeug aufgenommenen aktuellen Daten sowie aktuellem, amtlichen Kartenmaterial des Liegenschaftskatasters eine Korrektur der historischen Daten vorgenommen werden kann. Es ist davon auszugehen, dass die technischen Verfahren, mit denen die historischen Daten gewonnen wurden, noch nicht so ausgereift waren, wie das Aufzeichnen der Umgebungsdaten mit dem in dieser Anmeldung vorgestellten mobilen Aufzeichnungsgerät. Das System erlaubt somit eine zuverlässige Korrektur historischer Datenbanken, aber gleichzeitig auch das Ausnutzen von Informationen aus diesen Datenbanken, die heute vielleicht nicht mehr bekannt sind. Die Bestimmung der optimalen Route stützt sich daher auf einen größeren Umfang an Informationen weshalb mit einer genaueren Bestimmung der optimalen Route zu rechnen ist.

In einer beispielhaften Implementierung des Systems zur automatisierten Planung des Glasfaser-Rollouts ist der Prozessor ausgebildet, die Route basierend auf Bestandstrassen mit vorhandenen Rohrkapazitäten, Erdkabeltrassen und/oder oberirdischen Leitungen zu bestimmen.

Dies bietet den Vorteil, dass das System bei Nutzung der Bestandstrassen eine Route bestimmen kann, welche die vorhandenen Rohrkapazitäten, Erdkabeltrassen und/oder oberirdischen Leitungen nutzt, um ein Route mit günstigerem Aufwand zu bestimmen, was den gesamten Rollout technisch weniger aufwendig macht.

In einer beispielhaften Implementierung des Systems zur automatisierten Planung des Glasfaser-Rollouts ist der Prozessor ausgebildet, die Route basierend auf Bedarfsmengen von Haushalten und Gewerbeeinheiten sowie einem Bedarf von einem oder mehreren Netzbetreibern zu bestimmen.

Dies bietet den Vorteil, dass das System die bestimmte Route genau an die Bedarfsmengen anpassen kann und so eine effiziente Planung des Glasfaser-Rollouts durchführt.

In einer beispielhaften Implementierung des Systems zur automatisierten Planung des Glasfaser-Rollouts ist der Prozessor ausgebildet, die Route basierend auf Oberflächenstrukturen des geografischen Bereichs, insbesondere Oberflächenstrukturen der Kategorien: Ungebunden, Platten, Pflaster, Beton, Asphalt usw. zu bestimmen.

Dies bietet den Vorteil, dass das System bei Beachtung der Oberflächenstrukturen eine genau an diese Oberflächenstrukturen angepasste Route bestimmen kann. Insbesondere kann eine Routenlegung durch ungebundenes Material gegenüber Platten, Pflaster, Beton und Asphalt bevorzugt werden, so dass sich der Aufwand der technischen Realisierung reduziert.

In einer beispielhaften Implementierung des Systems zur automatisierten Planung des Glasfaser-Rollouts ist der Prozessor ausgebildet, die Route basierend auf Eigentumsverhältnissen des geografischen Bereichs, insbesondere der Kategorien:
öffentliches Eigentum und privates Eigentum sowie auf vorgegebenen Schutz- und Sperrgebieten zu bestimmen.

Dies bietet den Vorteil, dass bei Hinzuziehung von Informationen über Eigentumsverhältnisse eine genauere Planung vorgenommen werden kann. Zum Beispiel kann durch die Unterscheidung von öffentlichem und privatem Eigentum und durch Vermeidung von Ausbaumaßnahmen auf privatem Grund ein Ausbau zügig durchgeführt werden, so dass es zu keinen unvorhergesehenen Verzögerungen aufgrund möglicher Beschwerden kommt.

In einer beispielhaften Implementierung des Systems zur automatisierten Planung des Glasfaser-Rollouts ist der Prozessor ausgebildet, die vorhandene Datenbasis von Geodaten des geografischen Bereichs basierend auf der erweiterten Datenbasis von Geodaten des geografischen Bereichs zu aktualisieren.

Dies bietet den Vorteil, dass die aktuelle Datenbasis stets auf dem neuesten Stand ist und bei jeder Anreicherung der Daten mit gemessenen Umgebungsdaten die aktuelle Datenbasis genauer wird. Die Genauigkeit und Zuverlässigkeit der Datenbasis erhöht sich mit jeder Iteration.

Gemäß einem zweiten Aspekt betrifft die Erfindung ein Verfahren zur automatisierten Planung eines Glasfaser-Rollouts, mit folgenden Schritten: Erfassen von Umgebungsdaten eines geografischen Bereichs durch ein mobiles Aufzeichnungsgerät, insbesondere ein Fahrzeug mit geeigneten Sensoren (z.B. Kameras, Laser); Ermitteln einer Objekt- und Materialstruktur des erfassten geografischen Bereichs basierend auf einer Klassifikation der erfassten Umgebungsdaten, insbesondere einer Klassifikation mit einem Neuronalen Netzwerk; Erzeugen einer erweiterten Datenbasis von Geodaten des geografischen Bereichs basierend auf einer Anreicherung einer vorhandenen Datenbasis von Geodaten des geografischen Bereichs mit der ermittelten Objekt- und Materialstruktur des erfassten geografischen Bereichs unter Verwendung von vorgegebenen geografischen Informationen des geografischen Bereichs; und Bestimmen einer Route zwischen zumindest einem vorgebbaren Glasfaseranschlusspunkt und zumindest einem Glasfaserabschlusspunkt basierend auf einem Optimierungskriterium unter Verwendung der erweiterten Datenbasis von Geodaten des geografischen Bereichs.

Ein solches Verfahren erlaubt es, vorhandene manuelle Planungs- und Rollout-Prozesse für das Glasfaser-Rollout zu automatisieren und zu verbessern, indem kommerziell verfügbare Lösungen verwendet werden und ein hochgradig automatisierter und präziser Planungsprozess erstellt wird. Durch die Automatisierung der umfangreichen Bestandsdaten aus vorhandenen Datenbanken und die Anreicherung dieser Daten über mit hoher Genauigkeit aufgezeichnete Umgebungsdaten, z.B. 3D-Bildern von Objekten und feinste Oberflächenstrukturen des geografischen Bereichs kann eine erhebliche Steigerung der Anzahl der Glasfaserverbindungen bei gleichzeitiger Verbesserung der Genauigkeit des Glasfaser-Rollouts erzielt werden. Mit einem solchen Verfahren kann der gesamte Glasfaser-Rollout Prozess schneller und genauer durchgeführt werden.

Weitere Ausführungsbeispiele werden Bezug nehmend auf die beiliegenden Zeichnungen erläutert. Es zeigen:
Fig. 1 eine schematische Darstellung einer bestehenden Produktionsprozesskette 100 für einen Glasfaser-Rollout;
Fig. 2 eine schematische Darstellung eines Systems 200 zur automatisierten Planung eines Glasfaser-Rollouts gemäß einer beispielhaften Ausführungsform;
Fig. 3 eine schematische Darstellung eines vollautomatisierten Ende-zu-Ende Prozesses 300 für einen Glasfaser-Rollout gemäß einer beispielhaften Ausführungsform.
Fig. 4 eine schematische Darstellung der Architektur eines vollautomatisierten Planungsprozesses 400 für einen Glasfaser-Rollout gemäß einer beispielhaften Ausführungsform;
Fig. 5 eine schematische Darstellung eines Systems 500 zur automatisierten Planung eines Glasfaser-Rollouts gemäß einer beispielhaften Ausführungsform; und
Fig. 6 eine schematische Darstellung eines Verfahrens 600 zur automatisierten Planung eines Glasfaser-Rollouts gemäß einer beispielhaften Ausführungsform.

In der folgenden ausführlichen Beschreibung wird auf die beiliegenden Zeichnungen Bezug genommen, die einen Teil hiervon bilden und in denen als Veranschaulichung spezifische Ausführungsformen gezeigt sind, in denen die Erfindung ausgeführt werden kann. Es versteht sich, dass auch andere Ausführungsformen genutzt und strukturelle oder logische Änderungen vorgenommen werden können, ohne von dem Konzept der vorliegenden Erfindung abzuweichen. Die folgende ausführliche Beschreibung ist deshalb nicht in einem beschränkenden Sinne zu verstehen. Ferner versteht es sich, dass die Merkmale der verschiedenen hierin beschriebenen Ausführungsbeispiele miteinander kombiniert werden können, sofern nicht spezifisch etwas anderes angegeben ist.

Die Aspekte und Ausführungsformen werden unter Bezugnahme auf die Zeichnungen beschrieben, wobei gleiche Bezugszeichen sich im Allgemeinen auf gleiche Elemente beziehen. In der folgenden Beschreibung werden zu Erläuterungszwecken zahlreiche spezifische Details dargelegt, um ein eingehendes Verständnis von einem oder mehreren Aspekten der Erfindung zu vermitteln. Für einen Fachmann kann es jedoch offensichtlich sein, dass ein oder mehrere Aspekte oder Ausführungsformen mit einem geringeren Grad der spezifischen Details ausgeführt werden können. In anderen Fällen werden bekannte Strukturen und Elemente in schematischer Form dargestellt, um das Beschreiben von einem oder mehreren Aspekten oder Ausführungsformen zu erleichtern. Es versteht sich, dass andere Ausführungsformen genutzt und strukturelle oder logische Änderungen vorgenommen werden können, ohne von dem Konzept der vorliegenden Erfindung abzuweichen.

Wenngleich ein bestimmtes Merkmal oder ein bestimmter Aspekt einer Ausführungsform bezüglich nur einer von mehreren Implementierungen offenbart worden sein mag, kann außerdem ein derartiges Merkmal oder ein derartiger Aspekt mit einem oder mehreren anderen Merkmalen oder Aspekten der anderen Implementierungen kombiniert werden, wie für eine gegebene oder bestimmte Anwendung erwünscht und vorteilhaft sein kann. Weiterhin sollen in dem Ausmaß, in dem die Ausdrücke "enthalten", "haben", "mit" oder andere Varianten davon entweder in der ausführlichen Beschreibung oder den Ansprüchen verwendet werden, solche Ausdrücke auf eine Weise ähnlich dem Ausdruck "umfassen" einschließend sein. Die Ausdrücke "gekoppelt" und "verbunden" können zusammen mit Ableitungen davon verwendet worden sein. Es versteht sich, dass derartige Ausdrücke dazu verwendet werden, um anzugeben, dass zwei Elemente unabhängig davon miteinander kooperieren oder interagieren, ob sie in direktem physischem oder elektrischem Kontakt stehen oder nicht in direktem Kontakt miteinander stehen. Außerdem ist der Ausdruck "beispielhaft" lediglich als ein Beispiel aufzufassen anstatt der Bezeichnung für das Beste oder Optimale. Die folgende Beschreibung ist deshalb nicht in einem einschränkenden Sinne zu verstehen.

In der folgenden Beschreibung wird der Glasfaser-Rollout beschrieben. Rollout ist ein englischer Begriff, der so viel wie *Einführung* oder *Markteinführung* bedeutet. In mehreren Technikbereichen ist der Begriff in den deutschen Sprachgebrauch übergegangen und hat dort eine leicht abgewandelte Bedeutung angenommen.

Systeme und Verfahren gemäß dieser Anmeldung nutzen Geodaten eines geografischen Bereichs, um eine geeignete Route zur Verlegung von Glasfaserkabeln zu bestimmen. Geodaten sind *digitale* Informationen, denen auf der Erdoberfläche eine bestimmte räumliche Lage zugewiesen werden kann. Sie können unmittelbar gewonnene Primärdaten oder weiter bearbeitete Sekundärdaten sein. Von besonderer Bedeutung für Geodaten sind Metadaten, die die eigentlichen räumlichen Daten zum Beispiel hinsichtlich eines Zeitbezugs oder der Entstehung beschreiben. Geodaten gliedern sich in Raumbezug herstellende Geodaten bzw. Geobasisdaten, die in der Regel von den Vermessungsverwaltungen des Bundes und der Länder oder der Kommunen oder anderer Behörden bereitgestellt werden, und in Geofachdaten, die aus unterschiedlichen raumbezogenen Fachdatenbanken stammen. Sie werden in einem Geoinformationssystem geführt, das bei internetbasierten Systemen durch einen Geobrowser erschlossen werden kann.

Eine weitverbreitete Objektmodellierung in Geoinformationssystemen (GIS) ist es, derartige Objekte einerseits mit ihrer geometrischen Form, andererseits mit der zugehörigen Sachinformation (Attribute) abzulegen. Letztere können sich auch mit einer Referenz auf das geometrische Objekt beziehen. Theoretisch gibt es keine Beschränkung in der Dimension der geometrischen Form. Auch die Zeit wird oft als Dimension verwendet, etwa bei Messreihen oder Fernerkundungsdaten verschiedener Zeitpunkte.

In der folgenden Beschreibung werden verschiedene Verlegetechniken zum Glasfaser-Rollout beschrieben, insbesondere klassischer Tiefbau, Verlegen neuer Infrastruktur, Nutzung von vorhandener Infrastruktur.

Bei den Grabungsarbeiten mit dem Bagger kann je nach Oberfläche nur eine relativ geringe Tagesstrecke (30m bis 50m) erzielt werden. Die Kosten in ländlichen Gebieten steigen durch lange Streckenführungen. Vorhandene Infrastruktur sollte nicht beschädigt werden. Die Gefahr in dicht bebauten Innenstadtbereichen ist größer. Es kommt bei klassischem Tiefbau zur Beeinträchtigung der Anwohner und des Straßenverkehrs. Es können Schwierigkeiten der Verdichtung bei Verlegung in der Straße auftreten. Insgesamt ist diese Verlegetechnik relativ teuer und kann bis zu 80% der Kosten eines Glasfaserprojektes ausmachen.

Zum Verlegen neuer Infrastruktur eignet sich beispielsweise das Spülbohrverfahren. Hier wird die Spülbohrlanze von außen steuerbar durch den Boden geführt. Eine Mindesttiefe muss eingehalten werden, damit die Deckschicht nicht beschädigt wird. Beim Spülbohrverfahren weicht eine Spülbohremulsion den Boden auf und transportiert ihn nach außen. Anschließend wird ein Leerrohr wird mit dem Spül-Bohrkopf zurückgezogen. Tagesleistung des Verfahrens von 200m bis 400m . Eine weitere Technik zum Verlegen neuer Infrastruktur ist die Erdrakete, insbesondere bei der Herstellung von Hauszuführungen. Dabei fährt ein pneumatisch betriebener Verdrängungshammer einen unterirdischen Hohlraum auf. Eine weitere Technik zum Verlegen neuer Infrastruktur bildet die Überbohrtechnik. Bei dieser Technik wird das Spül-Bohrgestänge nach Entfernen der Muffenverbindungen lageparallel über ein Altkabel gefahren und bohrt das bestehende Kabel frei. Das Altkabel bildet dabei die Zwangsführung für die neue Trasse. Am Ziel kann danach das Altkabel mit einer Ziehwinde herausgezogen werden - und das neue Kabel beim Rückzug hinein. Durch die Zwangsführung ist eine Ortung bzw. Trassenfindung nicht erforderlich. Die Überbohrtechnik ist etwa fünfmal schneller als konventioneller Tiefbau. Das "Entkernen" der Kabelseele mit dem Kabel-X-Verfahren ist eine weitere Möglichkeit ohne Tiefbauarbeiten Glasfaserkabel zu verlegen. Hierbei werden nach dem Ausziehen in die leere Kabelhülle Mikroröhrchen eingezogen. In diese wird dann ein Glasfaser-Minikabel eingeblasen. Eine weitere Verlegetechnik neuer Infrastruktur bildet das Trenching-Verfahren. Dabei schlitzt eine Fräse die Fahrbahn bzw. den Gehweg auf, dabei werden Trassenlängen von bis zu 400m am Tag erreicht. In den erzeugten Schlitz wird das Leerrohr bzw. der Leerrohrverband direkt verlegt. Die Verfüllung erfolgt mit einem flüssigen, selbstaushärtenden, frostsicheren Material bis zur Unterkante der Asphaltdecke. Danach wird die Oberfläche ordnungsgemäß wieder hergestellt. Eine weitere Technik zum Verlegen neuer Infrastruktur bildet der Kabelpflug. Es werden Tagesleistungen bis 5km erzielt. Mit dem Kabelpflug wird in unbefestigten Oberflächen z.B. neben Straßen ein Hohlbereich in der erforderlichen Größe der neuen Anlage erzeugt. Die Oberfläche wird dabei durchschnitten und später z.B. mit einer Walze wieder angedrückt. Eine Lege-Tiefe von ca. 80 cm bis 160 cm ist realisierbar.

Bei Nutzung von vorhandener Infrastruktur kommt die Nutzung vorhandener Gas- und Trinkwasserleitungen zum Einsatz. An der Abzweigung des Hausanschlusses wird ein Y-Adapter gesetzt. Das Leerrohr wird durch die bestehende Gas- oder Trinkwasserleitung zum Haus gelegt. Bei Gas wird vor dem Haus ein weiterer Y-Adapter gesetzt und ein eigener Durchbruch für das Leerrohr gebohrt. Bei Trinkwasser wird das Glasfaserkabel erst im Gebäude vor der Gas- / Wasseruhr aus der Leitung herausgeführt.

Bei der Verlegung im Abwasserkanal können nicht begehbare Rohre mit Durchmesser von etwa 15 cm bis 70 cm genutzt werden. Ein Roboter montiert Halteringe mit Aufnahmevorrichtungen für Edelstahl-Röhrchen, in einem weiteren Arbeitsgang werden die Edelstahlröhrchen eingeclipst. In die Edelstahlröhrchen werden Mikrorohre / Glasfaserkabel eingebracht.

Beim Verlegen eines Glasfaserkabels entlang von Schienenanlagen können die Kabel mittels einer speziellen Verlegeeinheit verlegt werden. Die Verlegeeinheit besteht aus einem Kran-LKW mit Anhänger für Strecken bis etwa 8 km Länge. Nach dem Verlegen wird das Glasfaserkabel manuell mit einer Klammer an den Schienenfuß befestigt. Alternativ können die Kabeltröge der Deutschen Bahn mitgenutzt werden. Dies bedarf einer gesonderten vertraglichen Regelung.

Bei oberirdischen Linien kommt eine Verlegung von Glasfaserkabeln auf Holz- oder Betonmasttrassen in Frage. Die Verlegung erfolgt mit speziellem Glasfaserkabel und Muffen in einer Plug- and Play Technologie.

Im Folgenden wird eine Verarbeitung von Umgebungsdaten mittels neuronaler Netze beschrieben. Solche Neuronalen Netze bestehen aus mehreren Neuronen. Diese Neuronen werden auch als Units, Einheiten oder Knoten bezeichnet. Sie dienen dazu, Informationen aus der Umwelt oder von anderen Neuronen aufzunehmen und an andere Units oder die Umwelt in modifizierter Form weiterzuleiten. Man unterscheidet zwischen 3 verschiedenen Arten von Neuronen: Input Units sind Units die von der Außenwelt Signale (Reize, Muster) empfangen können; Hidden-Units sind Units, die sich zwischen Input- und Output-Units befinden und eine interne Repräsentation der Außenwelt beinhalten; Output-Units sind Units, die Signale an die Außenwelt weitergeben. Units sind miteinander durch Kanten verbunden. Die Stärke der Verbindung zwischen zwei Neuronen wird durch ein Gewicht ausgedrückt. Je größer der Absolutbetrag des Gewichtes ist, desto größer ist der Einfluss einer Unit auf eine andere Unit. Ein positives Gewicht bringt zum Ausdruck, dass ein Neuron auf ein anderes Neuron einen exzitatorischen, erregenden Einfluss ausübt. Ein negatives Gewicht bedeutet, dass der Einfluss inhibitorisch, also hemmender Natur ist. Ein Gewicht von Null besagt, dass ein Neuron auf ein anderes Neuron derzeit keinen Einfluss ausübt. Das Wissen eines neuronalen Netzes ist in seinen Gewichten gespeichert. Lernen wird bei neuronalen Netzen zumeist als Gewichtsveränderungen zwischen den Einheiten definiert. Wie die Gewichtsveränderung genau erfolgt ist abhängig von der verwendeten Lernregel.

Fig. 1 zeigt eine schematische Darstellung einer bestehenden Produktionsprozesskette 100 für einen Glasfaser-Rollout. Die Prozesskette 100 umfasst die verschiedenen Prozesse Strukturplanung 101, Projektierung und Wegesicherung 102, Ausschreibung 103, Bauen 104 und Abnahme und Dokumentation 105. Unter den einzelnen Prozessen ist jeweils der heute erzielte Automatisierungsgrad und der in der Zukunft mögliche Automatisierungsgrad aufgezeigt. Selbst wenn sich der Automatisierungsgrad der Einzelprozesse in der Zukunft erhöhen sollte, verbleiben bei dieser Produktionsprozesskette 100 die Nachteile vieler Prozessbrüche, schlechter Performance, vieler manueller Tätigkeiten, keiner Datenkonsistenz und automatischer Datenübergabe sowie keiner durchgängigen IT (Informationstechnik)-Unterstützung.

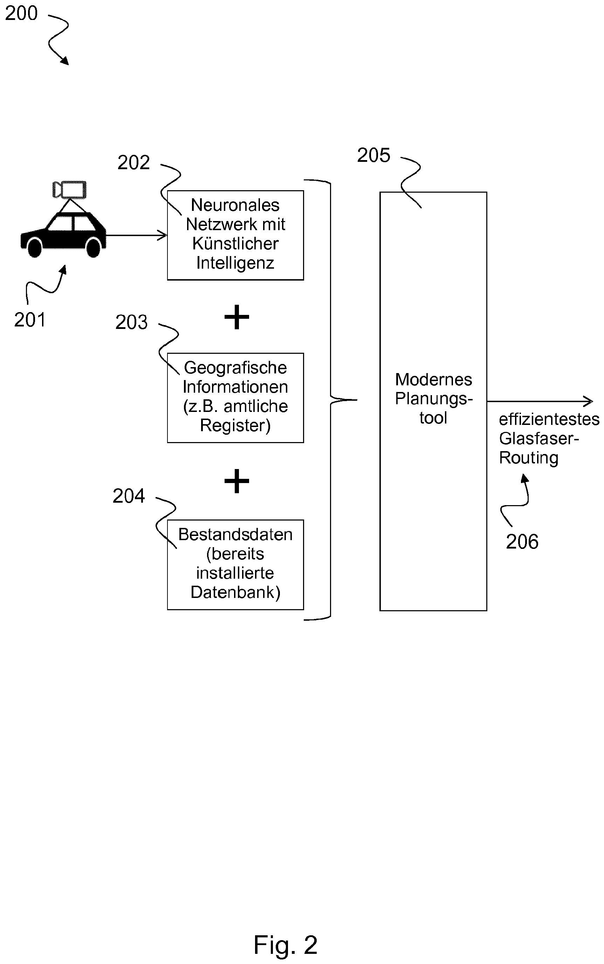

Fig. 2 zeigt eine schematische Darstellung eines Systems 200 zur automatisierten Planung eines Glasfaser-Rollouts gemäß einer beispielhaften Ausführungsform. Das System 200 umfasst ein Fahrzeug mit geeigneten Sensoren (z.B. Kamera, Laser) 201, ein Neuronales Netz mit künstlicher Intelligenz 202, eine Datenbank 203 mit geografischen Informationen, z.B. amtliche Register, eine Datenbank 204 mit Bestandsdaten, z.B. eine bereits installierte Datenbank, und ein modernes Planungstool 205. Das Fahrzeug mit Sensoren (z.B. Kamera, Laser) 201 zeichnet Umgebungsdaten auf und übergibt diese dem Neuronalen Netz mit Künstlicher Intelligenz 202, wo die Umgebungsdaten klassifiziert werden. Das Planungstool 205 berücksichtigt die klassifizierten Daten des Neuronalen Netzes 202 zusammen mit Daten der Datenbank 203 mit geografischen Informationen und Daten der Datenbank 204 mit Bestandsdaten, um ein effizientes Glasfaserrouting 206 zu bestimmen.

Das System 200 zur automatisierten Planung eines Glasfaser-Rollouts verwendet mehrere Datenquellen, die ihre aktuellen bzw. neuesten Daten in das moderne Planungstool 205 einbringen. Dies sind beispielsweise Umweltdaten, die z.B. ein Auto, Fußgänger, Motorrad oder eine Drohne aufzeichnet, um die neuesten Informationen über die Topographie, Oberflächenstrukturen und -materialien etc. bereitzustellen. Das Planungstool 205 überlagert diese Informationen mit den anderen Informationsquellen, wie z.B. Liegenschaftsdaten und Bestandsdaten vorhandener Datenbanken. Existierende Informationen, etc. schaffen damit eine solide Eingabegrundlage für das Planungswerkzeug 205. Die Anforderung an das System besteht darin, einen Bedarfspunkt innerhalb des gescannten geographischen Bereichs zu bestimmen, in dem die Glasfaserverbindung bereitgestellt werden soll. Als eine Ausgabe erzeugt der vollständige Prozess eine kosteneffiziente und optimierte Glasfaserroute und eine Kostenabschätzung für das Material, das während des Aufbaus verwendet werden kann, z. B. Glasfasern, Baukosten usw. Beim Aufbau der jeweiligen Glasfaser-Infrastruktur kann die tatsächlich genutzte Route mit einer Anwendung dokumentiert werden, die auf einem mobilen Gerät installierbar ist.

Das Fahrzeug mit geeigneten Sensoren (z.B. Kamera, Laser) 201 und das Neuronale Netz mit künstlicher Intelligenz 202 führt die folgenden Schritte aus: Datenerfassung, Fusion, Klassifizierung. Mit dem Fahrzeug mit geeigneten Sensoren (z.B. Kamera, Laser) 201, das meist ein Spezialfahrzeug ist, kann eine effiziente Datenfassung pro Ausbaugebiet gewährleistet werden. Die Datenerfassung erlaubt eine exakte Positions- und Lagebestimmung. Als Sensoren kann z.B. eine Video-Kamera oder auch ein Laser-Scanner eingesetzt werden. Das Neuronales Netz mit künstlicher Intelligenz 202 führt eine Fusion von 3D-Punktwolken und Bilddaten in Realkoordinaten durch, so dass Oberflächeneigenschaften aus fusionierten Daten erkannt werden können und Referenzpunkte zur Geo-Referenzierung von Karten ermittelt werden können.

Das System 200 zur automatisierten Planung des Glasfaser-Rollouts erlaubt die folgenden Einschränkungen des derzeit existierenden Produktionsprozesses, wie in Figur 1 dargestellt, aufzuheben:
1) Eingeschränkte Anzahl von Glasfaserinstallationen pro Jahr: Derzeit gibt es eine Beschränkung der Anzahl der Glasfaserverbindungspunkte, die pro Jahr mit der aktuellen Sequenz von Aktivitäten und verfügbaren Toolsets (Werkzeugkasten) implementiert und realisiert werden können. Mit dem System 200 ist der automatisierte Prozess in der Lage, bei gleicher Anzahl an Arbeitskräften das 100-fache der aktuellen Durchsätze zu erzeugen.
2) Geografische Korrektheit der Glasfaserstrecken und -kanäle: Die Korrektheit der geografischen Koordinaten der Strecken, Trassen, Verteilerschränke usw. wird durch die Verwendung eines gemeinsamen geografischen Raumbezugs- und Koordinatensystems signifikant verbessert. Um die Qualitätsverbesserung zu gewährleisten, werden außerdem die bestehenden Netzwerkdaten durch Homogenisierung der aktuellen Basiskoordinaten verbessert.
3) Dokumentation der Routen: Mit hochentwickelten Messwerkzeugen werden die "tatsächlichen" Glasfaserstrecken und das Verteilungsnetz genau dokumentiert, so dass der "Betrieb" der Glasfaser etc. deutlich verbessert werden kann und Informationen schneller verfügbar sind und korreliert werden können, um mögliche Probleme in einem früheren Stadium zu erkennen.
4) Kostentransparenz: Die Kosten für den Einsatz von Glasfaser in einer ausgewählten Region werden automatisch berechnet unter Berücksichtigung der Parameter:
   Optimierung des Installationsmaterials und der Belegschaft; Transparenz der Kosten pro Endpunkt; und totaler Kosten des Besitzers und entsprechender Amortisationszeiten der Investitionen.

Das System 200 zur automatisierten Planung des Glasfaser-Rollouts erlaubt es, die zur Verfügung stehenden Daten von Neuronalem Netz mit künstlicher Intelligenz 202, Datenbank 203 mit geografischen Informationen und Datenbank 204 mit Bestandsdaten vollständig zu integrieren. Somit erlaubt die Erfassung der "Ist-Oberflächendaten" als wichtiger Eingabeparameter für die automatisierte Planung eine hohe Genauigkeit in der Objektklassifizierung. Durch jüngste Entwicklungen auf dem Gebiet der Künstlichen Intelligenz, des Selbst- oder des Tiefenlernens usw. ist die Methode der "Objektklassifizierung", die auf den Eingabedaten basiert, besser zugänglich geworden und reduziert damit die manuelle Nachbearbeitung der Daten wesentlich. Auch spezifische Softwaretools, welche in den letzten Jahren bedeutende Entwicklungen und Verbesserungen erfahren haben, die sich mit dem Massen-Rollout und allen damit verbundenen Aspekten befassen, können effizient für das System 200 zur Planung und zum Rollout der Glasfaser eingesetzt werden.

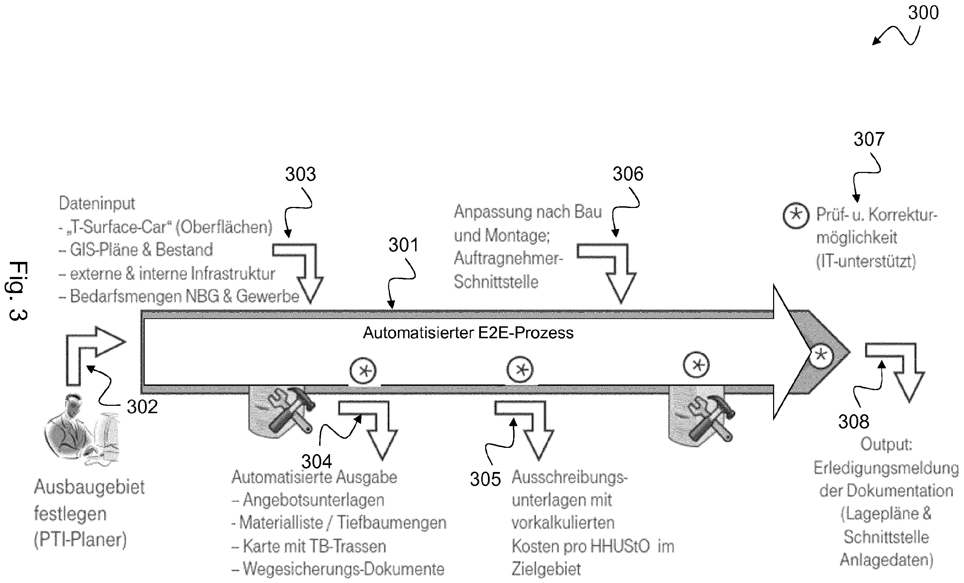

Fig. 3 zeigt eine schematische Darstellung eines vollautomatisierten Ende-zu-Ende (E2E) Prozesses für einen Glasfaser-Rollout 300 gemäß einer beispielhaften Ausführungsform. Der vollautomatisierte Ende-zu-Ende Prozess 301 integriert die einzelnen in Figur dargestellten Prozessschritte der Strukturplanung 101, Projektierung und Wegesicherung 102, Ausschreibung 103, Bauen 104 und Abnahme und Dokumentation 105 zu einem einzigen Prozess, der basierend auf Prozesseingaben 302, 303, 306 und Prozessausgaben 304, 305, 308 und IT unterstützten Prüf- und Korrekturmöglichkeiten 307 vollautomatisiert ausgeführt werden kann.

Eine erste Eingabe 302 stellt das Festlegen des Ausbaugebietes dar, beispielsweise durch einen Planer. Als zweite Eingabe 303 erfolgt die Dateneingabe von erfasster Oberflächen, welche beispielsweise über das Messfahrzeug gewonnen wurden, ferner von GIS (Geoinformationssystem)-Plänen und Bestand, externer und interner Infrastruktur sowie Bedarfsmengen für Wohneinheiten und Gewerbeeinheiten. Als erste Ausgabe 304 erfolgt die automatisierte Ausgabe von Angebotsunterlagen, Materialliste und Tiefbaumengen, einer Karte mit Tiefbau (TB)-Trassen sowie Wegesicherungs-Dokumente. Für die erste Ausgabe 304 besteht eine Prüf- und Korrekturmöglichkeit 307. Als zweite Ausgabe 305 erfolgt die automatisierte Ausgabe von Ausschreibungsunterlagen mit vorkalkulierten Kosten pro Einheit im Zielgebiet. Auch für die zweite Ausgabe 305 besteht eine Prüf- und Korrekturmöglichkeit 307. Als dritte Eingabe 306 erfolgt die Anpassung nach Bau und Montage über die Auftragnehmer-Schnittstelle. Dann können weitere Prüfungen und Korrekturen 307 vorgenommen werden. Als dritte Ausgabe 308 erfolgt schließlich die Erledigungsmeldung der Dokumentation mit Ausgabe von Lageplänen über die Schnittstelle der Anlagedaten.

Als Vorteile des vollautomatisierten Ende-zu-Ende (E2E) Prozesses im Gegensatz zum Prozess 100 aus Figur 1 zeigt sich, dass alle Wertschöpfungsstufen entlang einer IT-Lösung abgebildet werden können, dass Strukturplanung und Projektierung miteinander verschmelzen bzw. voll automatisch durchgeführt werden und dass alle Prozessschritte automatisiert bedient werden. Der manuelle Anteil beschränkt sich auf Prüf-und Korrekturschritte, Vertragsabschluss, Korrektur nach Bau und Montage sowie die Leistungsabnahme.

Durch die "Digitalisierung" des gesamten Glasfaser-Netzwerkes (Planung, Routen, Trassen, Verteiler, Bilder, Umfeld-Scanning etc.) werden viele weitere Möglichkeiten und Varianten eröffnet. Zum Beispiel die Integration mit anderen Datenquellen, wie z.B. Straßen, Daten von Versorgungsunternehmen (Gas, Strom, Wasser) etc. zur Verbesserung der Qualität der berechneten Glasfaserrouten; oder die Anwendung von Techniken der Virtuellen Realität (VR) für z.B. die Feld Serviceabteilung, um bei Problemen einen schnelleren Turnaround zu erreichen.

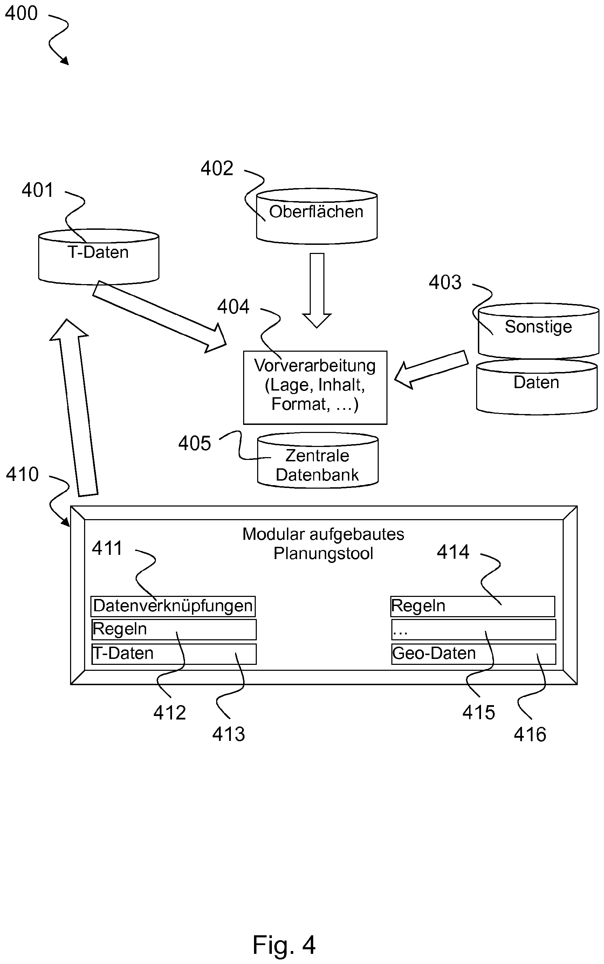

Fig. 4 zeigt eine schematische Darstellung der Architektur eines vollautomatisierten Planungsprozesses 400 für einen Glasfaser-Rollout gemäß einer beispielhaften Ausführungsform.

Der vollautomatisierte Planungsprozess 400 umfasst ein modular aufgebautes Planungstool 410 mit Datenverknüpfungen 411, Regeln 412, T-Daten 413, d.h. Umgebungsdaten, die von einem Fahrzeug über die Umgebung erfasst wurden, weiteren Regeln 414, Geo-Daten 416 und sonstigen Daten 415. Das Planungstool 410 erhält Eingaben von einer zentralen Datenbank 405, in welche Daten aus verschiedensten Quellen einfließen: eine Datenbank 401 mit T-Daten, eine Datenbank 402 mit Oberflächendaten der Umgebung, sowie Datenbanken 403 mit sonstigen Daten. Die verschiedenen Daten können mittels eines Vorverarbeitungsmoduls 404 vorverarbeitet werden, bevor sie in das Planungstool 410 gelangen, z.B. vorverarbeitet bezüglich ihrer Lage, ihres Inhalts und ihres Formats.

Das Planungstool 410 erlaubt die Koordination und Planung des Glasfaser-Rollouts anhand der folgenden Daten: Bedarfsmengen von Haushalten und Gewerbeeinheiten sowie Telekom-Netzbedarfen; Bestandstrassen mit Rohrkapazitäten, Erdkabeltrassen und oberirdischen Linien. Ferner können ergänzende Daten berücksichtigt werden zu Schutz-/Sperrgebieten wie z.B. Natur, Landschaft, Militär; Trassen von Dritten für Strom, Wasser, Gas; Daten über Ausbau-Hindernisse, wie z.B. Bahnlinien, Autobahnen oder Bergsenkungen; Untergrund-Daten zur Geologie, z.B. Steine, Felsen.

Das Planungstool 410 erlaubt ferner, den Fokus zu legen auf Oberflächenstrukturen, wie z.B. Ungebunden, Platten/Pflaster oder Beton/Asphalt; alternative Wege, wie z.B. Straßen, Bahnlinien sowie Eigentumsverhältnisse (öffentlicher versus privates Eigentum); Leerohrnetze Dritter. Ferner können folgende Daten berücksichtigt werden: FassadenDaten, z.B. Fenster und Oberflächen von Häusern, Gebäuden sowie Vegetationsdaten, z.B. von Bäumen, insbesondere Standort, Größe, Zustand und Baumart.

Beispielsweise kann das Planungstool 410 eine bestehende Trassenführung berücksichtigen, z.B. eine Kabelführung unter einer Asphaltstraße und die neue Trassenführung als Kabelführung unter einem neben der Asphaltstraße verlaufenden Grünstreifen vorschlagen. Diese alternative Trassenführung bewirkt eine Veränderung gegenüber dem Status Quo, insbesondere werden Vorteile aus einer zusätzlichen Einsparung durch den alternativen Weg unter einer günstigeren Oberfläche erzielt.

Das Planungstool 410 ermöglicht es eine exakte Mengen-und Kostenermittlung über automatisierte Planung zu ermitteln, eine bessere Ausschreibung gegenüber dem Auftragnehmer zu erzielen und dadurch einen geringeren Risikoaufschlag in Kauf zu nehmen. Bei gefördertem Ausbau bedeutet dies ein geringeres Capex-Risiko.

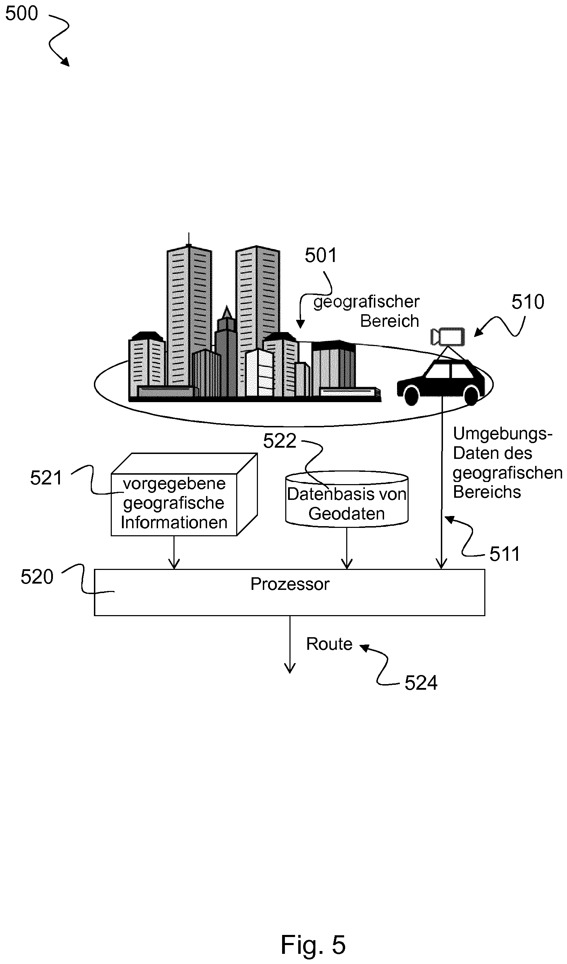

Fig. 5 zeigt eine schematische Darstellung eines Systems 500 zur automatisierten Planung eines Glasfaser-Rollouts gemäß einer beispielhaften Ausführungsform. Das System 500 umfasst ein mobiles Aufzeichnungsgerät 510 zum Erfassen von Umgebungsdaten 511 eines geografischen Bereichs 501 und einen Prozessor. Das mobile Aufzeichnungsgerät 510 kann z.B. ein Fahrzeug sein, welches mit Kamera und/oder Laser-Scanner ausgerüstet ist, um Bilder der Umgebung zu machen. Das Fahrzeug fährt z.B. ein Stadtteilviertel ab und zeichnet alle Daten in dreidimensionaler Form mit seinen Sensoren auf. So entsteht ein dreidimensionales Bild der Topographie der Umgebung des Fahrzeugs und der Oberflächenstruktur des gesamten Stadtteilviertels, nachdem das Fahrzeug verschiedene Wege durch den geografischen Bereich 501, d.h. das Stadtteilviertel als Beispiel, abgefahren hat. Zusätzlich kann das mobile Aufzeichnungsgerät 510 auch das Oberflächenmaterial scannen und prüfen, ob es sich um Asphalt, Bodenplatten, Erde, Wiese, Grasflächen oder anderes handelt.

Der Prozessor 520 ist ausgebildet zum Ermitteln einer Objekt- und Materialstruktur des erfassten geografischen Bereichs 501 basierend auf einer Klassifikation der erfassten Umgebungsdaten 511, insbesondere einer Klassifikation mit einem selbstlernenden Neuronalen Netzwerk. Anhand einer Auswertung des dreidimensionalen Bildmaterials kann durch Mustererkennungsverfahren, Bildanalyse und Klassifikation bestimmt werden, ob es sich beispielsweise um eine Straße handelt oder einen Fußgängerweg oder um einen Feldweg oder eine Grasfläche, etc. Diese Auswertung kann z.B. mit einem Neuronalen Netz erfolgen oder auch mit anderen Mustererkennungsverfahren mit oder ohne Nutzung künstlicher Intelligenz.

Der Prozessor 520 ist weiterhin ausgebildet zum Erzeugen einer erweiterten Datenbasis von Geodaten des geografischen Bereichs 501 basierend auf einer Anreicherung einer vorhandenen Datenbasis 522 von Geodaten des geografischen Bereichs 501 mit der ermittelten Objekt- und Materialstruktur des erfassten geografischen Bereichs 501 unter Verwendung von vorgegebenen geografischen Informationen 521 des geografischen Bereichs 501. Die erweiterte Datenbasis von Geodaten kann beispielsweise der zentralen Datenbank 405 gemäß Figur 4 entsprechen, in welcher basierend auf gemessenen Umgebungsdaten (z.B. den T-Daten 401 in Figur 4), Oberflächendaten 402 und sonstigen geografischen Daten 403 eine Vorverarbeitung 404 durchgeführt wird, um die mit den Umgebungsdaten angereicherten Geodaten zu erzeugen.

Der Prozessor 520 ist weiterhin ausgebildet zum Bestimmen zumindest einer Route 524 zwischen zumindest einem vorgebbaren Glasfaseranschlusspunkt und zumindest einem Glasfaserabschlusspunkt basierend auf einem Optimierungskriterium unter Verwendung der erweiterten Datenbasis von Geodaten des geografischen Bereichs 501. Das Optimierungskriterium kann z.B. einen kürzesten Weg zum Anschluss des Hausanschlusses (Glasfaseranschlusspunkt) an das Kommunikationsnetz (Glasfaserabschlusspunkt) angeben. Als Nebenbedingung kann ein kürzester Weg mit den geringsten Kosten, z.B. Materialkosten, Arbeitskosten, Verlegungskosten, etc.) gewählt werden.

Das System 500 kann ferner ein Baufahrzeug oder eine Maschine umfassen, welche basierend auf dem vom Prozessor 520 bestimmten Weg eine automatisierte Verlegung des entsprechenden Glasfaserkabels zwischen dem Glasfaseranschlusspunkt und dem Glasfaserabschlusspunkt vornimmt. Die Übertragung der Daten, d.h. der Route 524 und optional des benötigten Materials kann z.B. über Funk erfolgen. Das Baufahrzeug kann hier ein fahrerloses Fahrzeug sein, das vollautomatisch die benötigten Grabungen vornimmt, das Kabel verlegt und an die vorhandene Infrastruktur anschließt. Das Baufahrzeug oder die Maschine können die Verlegung der Glasfaser unter Nutzung der oben beschriebenen Verlegetechniken durchführen, d.h. Verlegen mittels klassischem Tiefbau, Verlegen neuer Infrastruktur und/oder Nutzung von vorhandener Infrastruktur.

Es versteht sich, dass mit diesem System 500 statt des Glasfaserkabels natürlich auch jede andere Art von Kabel geplant und verlegt werden kann, z.B. Kupferkabel, Stromkabel. Es können auch jede Art von Rohren geplant und verlegt werden, z.B. Abwasserrohre, Gasleitungsrohre, Wasserdampfrohre, Erdwärmerohre etc. Die Verlegung kann oberirdisch oder unterirdisch erfolgen.

Die Umgebungsdaten 511 können beispielsweise einen Verlauf von Oberflächen, Bebauung und Vegetation des geografischen Bereichs 501 umfassen, insbesondere Straßen, Bahnlinien, Autobahnen, Gebäude, Bäume, Steine, Felsen, Strom-, Wasser- und Gastrassen sowie Standort, Größe, Zustand und Art der Bäume und Fassadendaten der Gebäude mit Fenstern und Oberflächen.

Die vorgegebenen geografischen Informationen 521 des geografischen Bereichs 501 können Informationen aus geografischen Registern, insbesondere Liegenschaftsdaten, umfassen, z.B. aus amtlichen Registern 203 gemäß Figur 2.

Das Optimierungskriterium kann beispielsweise auf einer Minimierung von Materialkosten zur Verlegung eines Glasfaserkabels zur Verbindung des zumindest einen Glasfaseranschlusspunktes mit dem zumindest einen vorgegebenen Glasfaserabschlusspunkt beruhen.

Der Prozessor 520 kann ausgebildet sein, eine optimale Route des Glasfaserkabels zusammen mit einer Auflistung der Materialkosten bei Nutzung der optimalen Route auszugeben. Der Prozessor 520 kann ausgebildet sein, einen Aufwand zum Aushub von Material zur Verlegung des Glasfaserkabels zu bestimmen. Das Optimierungskriterium kann hierbei den Aufwand zum Aushub von Material zur Verlegung des Glasfaserkabels berücksichtigen.

Der Prozessor 520 kann ausgebildet sein, bereits bestehende Trassen zur Führung des Glasfaserkabels in dem geografischen Bereich 501 zu erkennen, insbesondere vorhandene Masten und/oder unterirdische Leitungen. Das Optimierungskriterium kann die bereits bestehenden Trassen zur Führung des Glasfaserkabels berücksichtigen.

Der Prozessor 520 kann ausgebildet sein, bereits vorhandene Kabel und deren Beschaltung in dem geografischen Bereich 501 zu erkennen. Das Optimierungskriterium kann auf einer Nutzung der vorhandenen Kabel zur Führung des Glasfaserkabels basieren.

Der Prozessor 520 kann ausgebildet sein, die erweiterte Datenbasis von Geodaten des geografischen Bereichs 501 basierend auf einer Korrektur von historischen geografischen Informationen mit falschen Geo-Koordinaten des geografischen Bereichs 501 zu erzeugen. Die Korrektur kann auf einem Abgleich mit Geo-Koordinaten der mit dem mobilen Aufzeichnungsgerät 510 erfassten Umgebungsdaten 511 des geografischen Bereichs 501 basieren oder kann auf einem Abgleich mit Geo-Koordinaten aus geografischen Registern, insbesondere Liegenschaftsdaten aus amtlichen Registern 203 gemäß Figur 2 basieren.

Der Prozessor 520 kann ausgebildet sein, die Route 524 basierend auf Bestandstrassen mit vorhandenen Rohrkapazitäten, Erdkabeltrassen und/oder oberirdischen Leitungen zu bestimmen. Der Prozessor 520 kann ausgebildet sein, die Route 524 basierend auf Bedarfsmengen von Haushalten und Gewerbeeinheiten sowie einem Bedarf von einem oder mehreren Netzbetreibern zu bestimmen. Der Prozessor 520 kann ausgebildet sein, die Route 524 basierend auf Oberflächenstrukturen des geografischen Bereichs 501, insbesondere Oberflächenstrukturen der Kategorien: Ungebunden, Platten, Pflaster, Beton, Asphalt zu bestimmen.

Der Prozessor 520 kann ausgebildet sein, die Route 524 basierend auf Eigentumsverhältnissen des geografischen Bereichs 501, insbesondere der Kategorien: öffentliches Eigentum und privates Eigentum sowie auf vorgegebenen Schutz- und Sperrgebieten zu bestimmen.

Der Prozessor 520 kann ausgebildet sein, die vorhandene Datenbasis 522 von Geodaten des geografischen Bereichs 501 basierend auf der erweiterten Datenbasis von Geodaten des geografischen Bereichs 501 zu aktualisieren. Sowohl die die vorhandene Datenbasis 522 von Geodaten als auch die erweiterte Datenbasis von Geodaten können in derselben Datenbank abgelegt sein. Die Erweiterung der Datenbasis kann iterativ erfolgen, d.h. mit jedem Satz neuer Umgebungsdaten wird eine weitere Iteration erzeugt.

Das System 500 kann verschiedene Arten von Prozessoren, Speichern und Transceivern, d.h. Sendern und/oder Empfängern, umfassen. Der Begriff "Prozessor" 520 beschreibt dabei jedes Gerät, das zur Verarbeitung bestimmter Aufgaben (oder Blöcke oder Schritte) verwendet werden kann. Ein Prozessor kann ein einzelner Prozessor oder ein Mehrkernprozessor sein oder kann einen Satz von Prozessoren umfassen oder kann Mittel zum Verarbeiten enthalten. Ein Prozessor kann Software oder Firmware oder Anwendungen usw. verarbeiten.

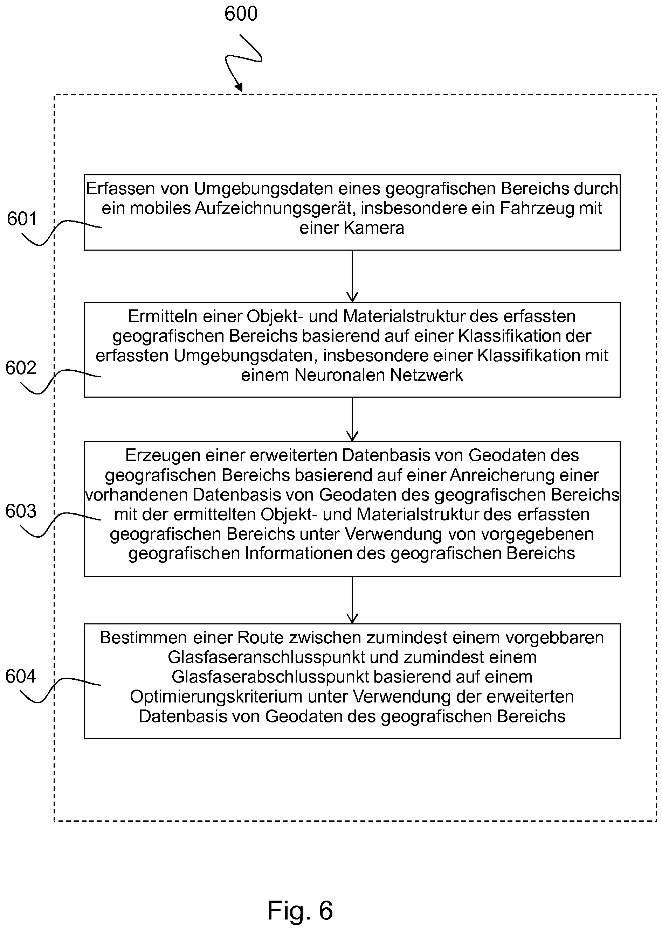

Fig. 6 zeigt eine schematische Darstellung eines Verfahrens 600 zur automatisierten Planung eines Glasfaser-Rollouts gemäß einer beispielhaften Ausführungsform.

Das Verfahren 600 umfasst einen ersten Schritt 601: Erfassen von Umgebungsdaten 511 eines geografischen Bereichs 501 durch ein mobiles Aufzeichnungsgerät 510, insbesondere ein Fahrzeug mit geeigneten Sensoren (z.B. Kamera, Laser), z.B. wie oben zu Figur 5 beschrieben.

Das Verfahren 600 umfasst einen zweiten Schritt 602: Ermitteln einer Objekt- und Materialstruktur des erfassten geografischen Bereichs basierend auf einer Klassifikation der erfassten Umgebungsdaten, insbesondere einer Klassifikation mit einem Neuronalen Netzwerk, z.B. wie oben zu Figur 5 beschrieben.

Das Verfahren 600 umfasst einen dritten Schritt 603: Erzeugen einer erweiterten Datenbasis von Geodaten des geografischen Bereichs basierend auf einer Anreicherung einer vorhandenen Datenbasis 522 von Geodaten des geografischen Bereichs mit der ermittelten Objekt- und Materialstruktur des erfassten geografischen Bereichs unter Verwendung von vorgegebenen geografischen Informationen 521 des geografischen Bereichs, z.B. wie oben zu Figur 5 beschrieben.

Das Verfahren 600 umfasst einen vierten Schritt 604: Bestimmen einer Route 524 zwischen zumindest einem vorgebbaren Glasfaseranschlusspunkt und zumindest einem Glasfaserabschlusspunkt basierend auf einem Optimierungskriterium unter Verwendung der erweiterten Datenbasis von Geodaten des geografischen Bereichs, z.B. wie oben zu Figur 5 beschrieben.

Die Schritte müssen nicht in der hier angegebenen Reihenfolge ausgeführt werden.

Das Verfahren 600 kann weitere Schritte umfassen, wie beispielsweise entsprechend denen oben zu den Figuren 2 bis 5 beschriebenen Techniken.

Ein Aspekt der Erfindung umfasst auch ein Computerprogrammprodukt, das direkt in den internen Speicher eines digitalen Computers geladen werden kann und Softwarecodeabschnitte umfasst, mit denen das zu Fig. 6 beschriebene Verfahren 600 oder die zu den Figuren 2 bis 5 beschriebenen Vorgänge ausgeführt werden können, wenn das Produkt auf einem Computer läuft. Das Computerprogrammprodukt kann auf einem computergeeigneten nicht-transitorischen Medium gespeichert sein und computerlesbare Programmittel umfassen, die einen Computer veranlassen, das Verfahren 600 auszuführen.

Der Computer kann ein PC sein, beispielsweise ein PC eines Computernetzwerks. Der Computer kann als ein Chip, ein ASIC, ein Mikroprozessor oder ein Signalprozessor realisiert sein und in einem Computernetzwerk, beispielsweise in einem Kommunikationsnetz angeordnet sein.

Es ist selbstverständlich, dass die Merkmale der verschiedenen beispielhaft hierin beschriebenen Ausführungsformen miteinander kombiniert werden können, außer wenn spezifisch anderweitig angegeben. Wie in der Beschreibung und den Zeichnungen dargestellt müssen einzelne Elemente, die in Verbindung stehend dargestellt wurden, nicht direkt miteinander in Verbindung stehen; Zwischenelemente können zwischen den verbundenen Elementen vorgesehen sein. Ferner ist es selbstverständlich, dass Ausführungsformen der Erfindung in einzelnen Schaltungen, teilweise integrierten Schaltungen oder vollständig integrierten Schaltungen oder Programmiermitteln implementiert sein können. Der Begriff "beispielsweise" ist lediglich als ein Beispiel gemeint und nicht als das Beste oder Optimale. Es wurden bestimmte Ausführungsformen hierin veranschaulicht und beschrieben, doch für den Fachmann ist es offensichtlich, dass eine Vielzahl von alternativen und/oder gleichartigen Implementierungen anstelle der gezeigten und beschriebenen Ausführungsformen verwirklicht werden können, ohne vom Konzept der vorliegenden Erfindung abzuweichen.

## Patentansprüche

1. System (500) zur automatisierten Planung eines Glasfaser-Rollouts, wobei das System (500) folgendes umfasst:
ein mobiles Aufzeichnungsgerät (510) zum Erfassen von Umgebungsdaten (511) eines geografischen Bereichs (501), insbesondere ein Fahrzeug mit einer Kamera; und
einen Prozessor (520), der ausgebildet ist zum
Ermitteln einer Objekt- und Materialstruktur des erfassten geografischen Bereichs (501) basierend auf einer Klassifikation der erfassten Umgebungsdaten (511), insbesondere einer Klassifikation mit einem selbstlernenden Neuronalen Netzwerk;
Erzeugen einer erweiterten Datenbasis von Geodaten des geografischen Bereichs (501) basierend auf einer Anreicherung einer vorhandenen Datenbasis (522) von Geodaten des geografischen Bereichs (501) mit der ermittelten Objekt- und Materialstruktur des erfassten geografischen Bereichs (501) unter Verwendung von vorgegebenen geografischen Informationen (521) des geografischen Bereichs (501); und
Bestimmen zumindest einer Route (524) zwischen zumindest einem vorgebbaren Glasfaseranschlusspunkt und zumindest einem Glasfaserabschlusspunkt basierend auf einem Optimierungskriterium unter Verwendung der erweiterten Datenbasis von Geodaten des geografischen Bereichs (501).

2. System (500) nach Anspruch 1,
wobei die Umgebungsdaten (511) einen Verlauf von Oberflächen, Bebauung und Vegetation des geografischen Bereichs (501) umfassen, insbesondere Straßen, Bahnlinien, Autobahnen, Gebäude, Bäume, Strom-, Wasser- und Gastrassen sowie Standort, Größe, Zustand und Art der Bäume und Fassadendaten der Gebäude mit Fenstern und Oberflächen.

3. System (500) nach Anspruch 1 oder 2,
wobei die vorgegebenen geografischen Informationen (521) des geografischen Bereichs (501) Informationen aus geografischen Registern, insbesondere Katasterkarten, umfassen.

4. System (500) nach einem der vorstehenden Ansprüche,
wobei das Optimierungskriterium auf einer Minimierung von Materialkosten zur Verlegung eines Glasfaserkabels zur Verbindung des zumindest einen Glasfaseranschlusspunktes mit dem zumindest einen vorgegebenen Glasfaserabschlusspunkt beruht.

5. System (500) nach Anspruch 4,
wobei der Prozessor (520) ausgebildet ist, eine optimale Route des Glasfaserkabels zusammen mit einer Auflistung der Materialkosten bei Nutzung der optimalen Route auszugeben.

6. System (500) nach Anspruch 4 oder 5,
wobei der Prozessor (520) ausgebildet ist, einen Aufwand zum Aushub von Material zur Verlegung des Glasfaserkabels zu bestimmen; und
wobei das Optimierungskriterium den Aufwand zum Aushub von Material zur Verlegung des Glasfaserkabels berücksichtigt.

7. System (500) nach einem der Ansprüche 4 bis 6,
wobei der Prozessor (520) ausgebildet ist, bereits bestehende Trassen zur Führung des Glasfaserkabels in dem geografischen Bereich (501) zu erkennen, insbesondere vorhandene Masten und/oder unterirdische Leitungen; und
wobei das Optimierungskriterium die bereits bestehenden Trassen zur Führung des Glasfaserkabels berücksichtigt.

8. System (500) nach Anspruch 7,
wobei der Prozessor (520) ausgebildet ist, bereits vorhandene Kabel und deren Beschaltung in dem geografischen Bereich (501) zu erkennen; und
wobei das Optimierungskriterium auf einer Nutzung der vorhandenen Kabel zur Führung des Glasfaserkabels basiert.

9. System (500) nach einem der vorstehenden Ansprüche,
wobei der Prozessor (520) ausgebildet ist, die erweiterte Datenbasis von Geodaten des geografischen Bereichs (501) basierend auf einer Korrektur von historischen geografischen Informationen mit falschen Geo-Koordinaten des geografischen Bereichs (501) zu erzeugen,
wobei die Korrektur auf einem Abgleich mit Geo-Koordinaten der mit dem mobilen Aufzeichnungsgerät (510) erfassten Umgebungsdaten (511) des geografischen Bereichs (501) basiert oder auf einem Abgleich mit Geo-Koordinaten aus geografischen Registern, insbesondere Katasterkarten.

10. System (500) nach einem der vorstehenden Ansprüche,
wobei der Prozessor (520) ausgebildet ist, die Route (524) basierend auf Bestandstrassen mit vorhandenen Rohrkapazitäten, Erdkabeltrassen und/oder oberirdischen Leitungen zu bestimmen.

11. System (500) nach einem der vorstehenden Ansprüche,
wobei der Prozessor (520) ausgebildet ist, die Route (524) basierend auf Bedarfsmengen von Haushalten und Gewerbeeinheiten sowie einem Bedarf von einem oder mehreren Netzbetreibern zu bestimmen.

12. System (500) nach einem der vorstehenden Ansprüche,
wobei der Prozessor (520) ausgebildet ist, die Route (524) basierend auf Oberflächenstrukturen des geografischen Bereichs (501), insbesondere Oberflächenstrukturen der Kategorien: Ungebunden, Platten, Pflaster, Beton, Asphalt zu bestimmen.

13. System (500) nach einem der vorstehenden Ansprüche,
wobei der Prozessor (520) ausgebildet ist, die Route (524) basierend auf Grundbesitzverhältnissen des geografischen Bereichs (501), insbesondere der Kategorien: öffentlicher Besitz und privater Besitz sowie auf vorgegebenen Schutz- und Sperrgebieten zu bestimmen.

14. System (500) nach einem der vorstehenden Ansprüche,
wobei der Prozessor (520) ausgebildet ist, die vorhandene Datenbasis (522) von Geodaten des geografischen Bereichs (501) basierend auf der erweiterten Datenbasis von Geodaten des geografischen Bereichs (501) zu aktualisieren.

15. Verfahren (600) zur automatisierten Planung eines Glasfaser-Rollouts, mit folgenden Schritten:
Erfassen (601) von Umgebungsdaten (511) eines geografischen Bereichs (501) durch ein mobiles Aufzeichnungsgerät (510), insbesondere ein Fahrzeug mit einer Kamera;
Ermitteln (602) einer Objekt- und Materialstruktur des erfassten geografischen Bereichs basierend auf einer Klassifikation der erfassten Umgebungsdaten, insbesondere einer Klassifikation mit einem Neuronalen Netzwerk;
Erzeugen (603) einer erweiterten Datenbasis von Geodaten des geografischen Bereichs basierend auf einer Anreicherung einer vorhandenen Datenbasis (522) von Geodaten des geografischen Bereichs mit der ermittelten Objekt- und Materialstruktur des erfassten geografischen Bereichs unter Verwendung von vorgegebenen geografischen Informationen (521) des geografischen Bereichs; und
Bestimmen (604) einer Route (524) zwischen zumindest einem vorgebbaren Glasfaseranschlusspunkt und zumindest einem Glasfaserabschlusspunkt basierend auf einem Optimierungskriterium unter Verwendung der erweiterten Datenbasis von Geodaten des geografischen Bereichs.
